# EUROPEAN PATENT SPECIFICATION

(11) **EP 1 728 152 B1**
(45) Date of publication and mention of the grant of the patent: **05.05.2010**
(21) Application number: 05708837.9
(22) Date of filing: 24.02.2005
(51) Int. Cl.: G06F 9/38, G06F 21/00

(54) **PIPELINE CIRCUIT**
PIPELINE-SCHALTUNG
CIRCUIT ELECTRONIQUE

(30) Priority: 10.03.2004 EP 04100982
(43) Date of publication of application: 06.12.2006
(73) Proprietor: NXP B.V., 5656 AG Eindhoven (NL)
(72) Inventor: BINK, Adrianus, J., NL-5656 AA Eindhoven (NL); DE CLERCQ, Mark, N., O., NL-5656 AA Eindhoven (NL)
(74) Representative: Williamson, Paul Lewis
(86) International application number: PCT/IB2005/050685
(87) International publication number: WO 2005/088442

(56) References cited:
- WO-A-01/90854

## Description

### TECHNICAL FIELD OF THE INVENTION

The present invention relates to the field of electronic circuits, and in particular to the integration of a cryptography feature in an electronic circuit comprising a pipeline.

### BACKGROUND OF THE INVENTION

Microprocessors are often used for applications involving cryptography. One example of this is microprocessors used in smart cards. For these applications, the security of the data is of prime importance and much effort is expended in ensuring that microprocessors are difficult to decipher or crack.

One of the most common ways of deciphering a microprocessor is by monitoring the power output of the smart card. The most basic form of this technique is referred to as simple power analysis (SPA), and a more complex technique is termed differential power analysis (DPA).

In pipelined processors, the clocking of each stage of the microprocessor produces current peaks that can be monitored and used in SPA and DPA. These current peaks can then be analysed to extract the data being processed by the smart card.

One way to reduce the effectiveness of power output analysis techniques such as SPA and DPA is to randomise and minimise the occurrence of current peaks.

PCT patent application No. WO 01/90854 discloses a processing unit and an idle function generator which randomly produces idle functions in the data processing unit, thereby making it considerably more difficult to eavesdrop by analysing information leaks or even preventing said eavesdropping.

In synchronous systems, at every rising edge of the clock signal, new data is latched into all flip-flops of each stage. The simultaneous clocking of all the stages of the pipeline of the microprocessor results in a large current peak, which is easily detectable using DPA and SPA. Techniques such as voltage scaling or that disclosed in "Secure Contactless Smartcard ASIC with DPA Protection" IEEE Journal of Solid State Circuits, Vol. 36, No. 3, March 2001, p559-565 by Patrick Rakers, Larry Connell, Tim Collins and Dan Russell have been developed for reducing these current peaks and making the synchronous microprocessor-based smartcards more secure. However, these techniques require the addition of an isolation network or voltage scaling circuit, which increases the amount of hardware required.

Alternatively, asynchronous microprocessors can be used instead of synchronous ones.

Many asynchronous microprocessors use 'pipelines' to increase parallelism and performance. That is, where instruction execution in a microprocessor comprises several independent steps, separate units can be created in the microprocessor to carry out each step. When a unit finishes executing an instruction, it is passed on to the next unit in the 'pipeline', and starts work on the next instruction. Therefore, although the length of time required for an entire instruction to be executed remains the same as in a non-pipelined system, as the next instruction is only one unit behind, the overall result is that the performance of the microprocessor is improved.

Unlike synchronous circuits in which a global clock signal controls how long a component processes data and when that data propagates to the next part of the system, components in asynchronous systems execute tasks at their own rate, and only move on to the next task when the next part of the system has acknowledged receipt of the data.

Therefore, as asynchronous microprocessors do not have a global clock to latch the data through the pipeline stages, and data is only latched when and where needed, current peaks are reduced in size and are spread out in time when compared to a synchronous microprocessor. Therefore, it is much more difficult to interpret what instructions and data are being processed by the microprocessor using the SPA and DPA techniques.

However, current peaks do still exist and, although being more difficult to identify, they can still lead to the microprocessor data being fraudulently interrogated.

There is therefore a need for a technique to further randomise the occurrence and magnitude of current peaks in asynchronous processors.

### SUMMARY OF THE INVENTION

According to a first aspect of the present invention, there is provided an electronic circuit comprising first and second pipeline stages; and a latch positioned between the pipeline stages, according to claim 1.

Preferably, the electronic circuit comprises a third pipeline stage and a second latch, the second latch positioned between the second and third pipeline stages.

When the electronic circuit is operating in the reduced mode, both of the first and second latches can be held open to reduce the current peaks associated with the opening and closing of the latches.

Alternatively, when the electronic circuit is operating in the reduced mode, one of the first and second latches is held open to reduce the current peak associated with the opening and closing of that latch. Preferably, the latch held open changes over time. Preferably, the first and second latches are held open for different lengths of time.

Preferably, the length of time that the electronic circuit operates in the reduced mode varies.

According to another aspect of the present invention, there is provided a method of operating an electronic circuit, the electronic circuit comprising first and second pipeline stages and a latch positioned between the stages, the method comprising operating the electronic circuit in a normal mode in which the latch is opened and closed in response to an enable signal, and a reduced mode in which the latch is held open to reduce a current peak associated with the opening and closing of the latch, according to claim 11.

### BRIEF DESCRIPTION OF THE DRAWINGS

For a better understanding of the present invention, and to show more clearly how it may be carried into effect, reference will now be made, by way of example, to the following drawings, in which:
Figure 1 is a five-stage pipeline in accordance with one aspect of the present invention;
Figure 2 shows one implementation of a pipeline latch controller in accordance with an embodiment of the present invention; and
Figure 3 shows control signals according to the invention.

### DETAILED DESCRIPTION OF THE PREFERRED EMBODIMENTS

Although the present invention will be described below with reference to a pipeline in an asynchronous microprocessor, it will be appreciated that the present invention is applicable to any type of electronic circuit having a pipeline.

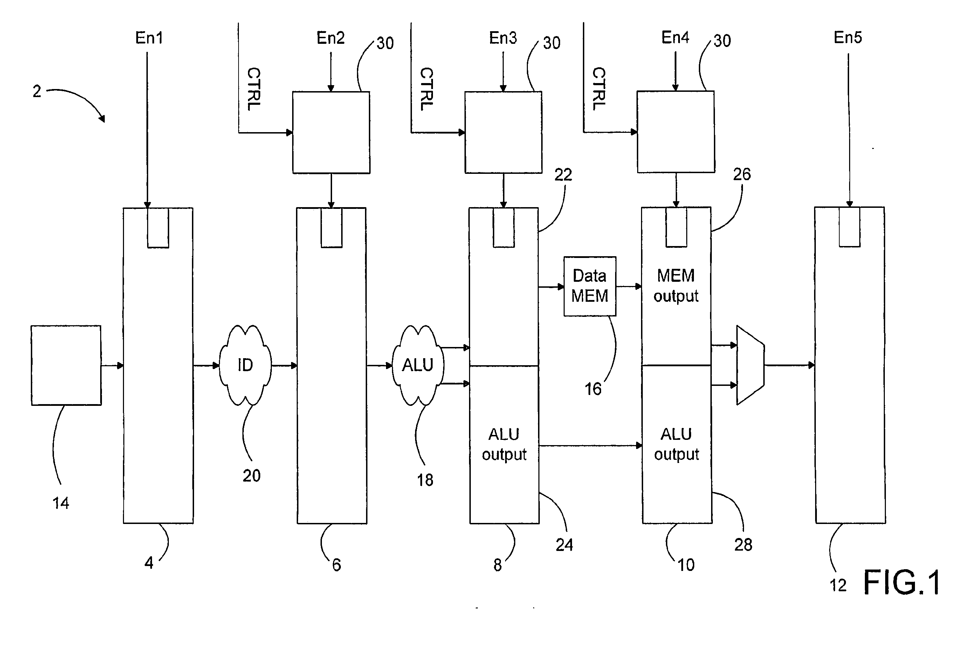

Figure 1 shows a five-stage pipeline in accordance with an aspect of the present invention. Although the invention will be described with reference to a five-stage pipeline, it will be appreciated that the invention is applicable to pipelines having any number of stages.

The stages of the pipeline 2 each comprise a respective latch (4, 6, 8, 10 and 12), and as conventional, each latch has a respective enable signal, En1, En2, En3, En4 or En5, which determines the operating mode of the latch. When the latch is enabled, the output of the latch is the same as the input of the latch, and the latch is called *transparent*. When the latch is disabled, the output of the latch holds the last value at its input.

An instruction memory 14 is connected to the first latch 4, and this stores the instructions for the processor pipeline 2. The instructions may comprise load instructions, which are used to access a particular address in a data memory 16, or may comprise arithmetic computation instructions that are to be executed by an arithmetic and logic unit (ALU) 18. Other types of instructions, for example, are Compare instructions, Jump instructions, Branch instructions and Store instructions.

The retrieved instruction is stored in the first latch 4, and is passed to a first unit 20. The first unit 20 is commonly known as the decode stage and decodes the retrieved instruction. The output of the first unit 20, which may comprise control and data signals, is stored in the second latch 6, when the second latch 6 has received confirmation that the preceding instruction has been safely stored in the third latch 8. These control and data signals tell each stage of the pipeline which operation they should perform.

The instruction stored in the second latch 6 is then executed by ALU 18. If the instruction is an arithmetic computation instruction, the ALU 18 performs the computation. However, if the instruction is a load instruction, the ALU 18 calculates the address that must be accessed in the data memory 16 at the fourth stage of the pipeline 2. The result of the computation is then stored in a register 22 or 24 of the third latch 8 when the third latch 8 has received confirmation that the preceding instruction has been stored by the next stage. The particular register 22, 24 within the third latch 8 that stores the result is determined by the nature of the instruction being processed. For example, if the instruction is a load instruction, the result is stored in the top register 22 so that the data memory 16 can be accessed. Alternatively, if the instruction is an arithmetic instruction, the result is stored in the bottom register 24. In one implementation, the enable signal En3 in conjunction with conditional bits allows the selection of the separate registers 22, 24.

In the fourth stage, if the present instruction is a load instruction, the data memory 16 is accessed and the required data read out to the top register 26 of latch 10. If the present instruction is an arithmetic computation instruction, the result from the third stage (stored in latch 8) is now stored in the bottom register 28 of latch 10.

Although only two registers are shown in each of the third and fourth latches 8 and 10, it will be appreciated that there may be more than two, and the exact number will depend on the types of instructions that the pipeline can process.

In the fifth stage, the result of the fourth stage (stored in latch 10) is written into latch 12 (hereinafter referred to as the 'register file').

As described above, this asynchronous pipeline does not have, by definition, a global clock signal for controlling the latching of data through the pipeline stages and hence current peaks are reduced in size and are spread out in time when compared to a synchronous microprocessor. However, current peaks do still exist and, although harder to identify, they can still lead to the data in the asynchronous microprocessor being cracked.

Therefore, in accordance with the invention, one or more of the latches in the microprocessor pipeline are controllable so that they can be randomly held in a transparent mode, effectively combining the two adjacent stages of the pipeline into one stage, and reducing the current peaks associated with the latching of data through the pipeline. By varying the latch in the pipeline that is held transparent, the timing of current peaks can also be randomised.

Therefore, in the aspect of the invention illustrated in Figure 1, latch control circuits 30 are provided to control the operation of the second, third and fourth stage latches 6, 8 and 10. Each latch control circuit 30 receives the appropriate latch enable signal and a control signal (CTRL).

According to alternative aspects of the present invention, the latch controller or further latch controllers can be connected to other latches in the pipeline, and not just the second, third and fourth latches as shown in Figure 1.

The latch control circuit 30 acts to control the mode of operation of the associated latch. If the control signal (CTRL) indicates that the latch should be operated normally, the latch control circuit 30 causes the latch to be operated by the enable signal, En. That is, the enable signal controls whether the latch is transparent (i.e. when it is loading the next data to be stored) or whether it is holding the last value at its input when the latch was last enabled.

However, when it is desired to reduce the current peak associated with the opening and closing of the latch, the control signal (CTRL) causes the latch to become transparent, effectively combining two adjacent stages into one stage. That is, the latch control circuit 30 overrides the enable signal En, and holds the latch in a transparent state. Once data is input into the first of these two stages, the latch is held in a transparent mode until the next non-transparent latch acknowledges receipt of the result of the instruction (the length of time required for this acknowledgement will depend on the handshaking protocol being used in the system).

It will be appreciated that one or more latches (whether or not those latches are in consecutive positions within the pipeline) may be held in a transparent state at a time.

A pipeline 2, having a mode in which one or more of the latches are held open, effectively rendering that stage transparent, is known as a *reduced* pipeline.

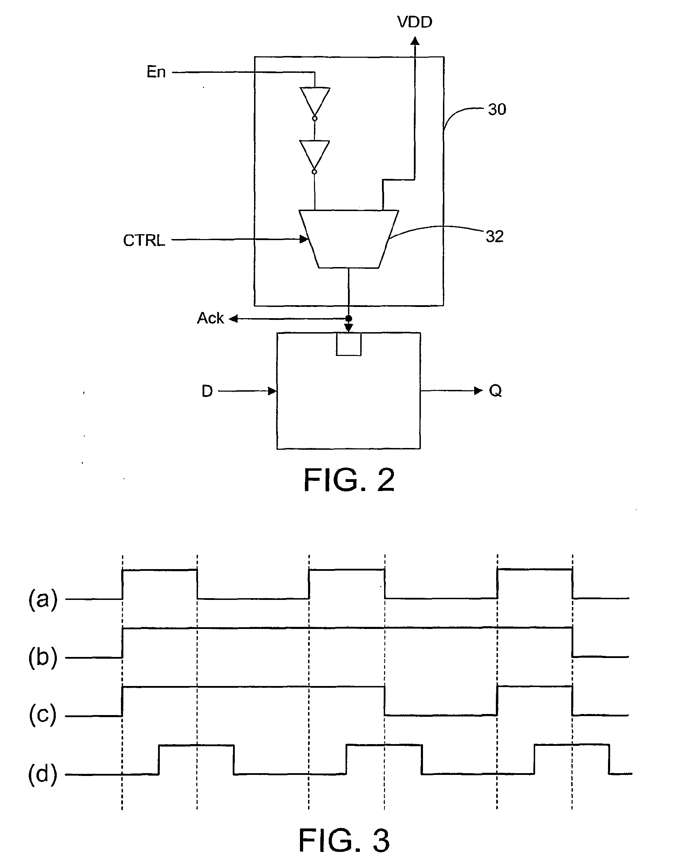

One implementation of a pipeline latch controller is shown in Figure 2. The latch is switched between a normal latching mode (in which it is controlled by an enable signal En) and a reduced mode where it is kept transparent.

In this Figure, a high value of the enabling signal (En) is translated into the latch becoming transparent. However, the adaptation of this controller to the opposite situation, in which a low value of the enabling signal (En) makes the latch transparent, will be readily apparent to a person skilled in the art.

In the latch controller 30, the switching between the reduced mode and a normal mode is determined by the control signal (CTRL). The control signal (CTRL) controls the operation of a multiplexer 32, which has an enable signal (En) and a supply voltage signal (VDD) as its inputs.

If it is determined that the latch should be reduced to randomise the occurrence and magnitude of current peaks, the multiplexer 32 is controlled by the control signal (CTRL) so that the supply voltage signal (VDD) controls the operation of the latch. Therefore, the latch will be forced into a transparent state, regardless of the value of the enable signal (En). When the latch is to be used by the pipeline again, the control signal operates the multiplexer 32 so that the enable signal (En) is passed to the latch, allowing data to be stored in the latch as normal.

It will be appreciated that the latch control circuit described above and shown in Figure 2 is exemplary and is merely one of many possible latch control circuits that may be used to implement the present invention. Many alternative types of latch control circuit will be readily apparent to a person skilled in the art.

Therefore, a latch with such a controller can be switched into a transparent mode whilst the other latches in the system can keep latching normally in response to their enable signals. If there are multiple latch controllers in the pipeline, each latch controller may receive the same control signal, or may receive individual control signals.

The control signal (CTRL) is generated by a random signal generator (not shown). The signal generator is configured to operate such that the "random" signal is safe with regard to the latch operation. For example, if a latch that is currently storing data is switched into a transparent state before the next latch stores that data, the data will be lost. Figure 3 illustrates two exemplary safe control signals.

Signal (a) is an enable signal for a conventional latch. The rising edge corresponds to the point where the latch is put into a transparent (or open) mode to load the next data, and the falling edge corresponds to the point where the latch is closed and the data stored.

Signals (b) and (c) show first and second safe control signals in accordance with the invention. As the rising and falling edges of the signals correspond to those of the original enable signal, the introduction of setup and hold violations in the registers are prevented, and the signals are considered safe.

Signal (d) shows a signal that is unsafe, as the rising and falling edges do not correspond to those in the original enable signal.

Therefore, as asynchronous microprocessors have reduced current peaks compared to their synchronous equivalents, pipeline reduction can be used to randomly open the latch of a certain stage in the pipeline, resulting in a random occurrence of those smaller current peaks. This means that it is more difficult to determine what action has just occurred in the microprocessor, and therefore it is more difficult to fraudulently interrogate the data of the smart card.

A second advantage results from the fact that, in the cases where a pipeline stage is reduced, there is no need to activate the latches of that stage, thus decreasing the power consumption of the chip.

A third advantage stems from the fact that it is possible to program the situations in which the latches are to be transparent. Thus, the microprocessor could run normally (i.e. with all latches in a normal mode) when high performance is needed, but use pipeline reduction when processing sensitive data.

It should be noted that the above-mentioned embodiments illustrate rather than limit the invention, and that those skilled in the art will be able to design many alternative embodiments without departing from the scope of the appended claims. The word 'comprising' does not exclude the presence of elements or steps other than those listed in a claim.

## Claims

1. An electronic circuit comprising:
first and second pipeline stages; and
a first latch (4) positioned between the pipeline stages;
**characterized by**:
a first latch control circuit (30) responsive to a randomly generated signal for operating the electronic circuit in a normal mode in which the first latch (4) is opened and closed in response to an enable signal (En) from the first latch control circuit (30), and a reduced mode triggered by the randomly generated signal in which the first latch (4) is held open to reduce a current peak associated with the opening and closing of the first latch (4).

2. An electronic circuit as claimed in claim 1, further comprising a third pipeline stage and a second latch (6) positioned between the second and third pipeline stages.

3. An electronic circuit as claimed in claim 2, wherein the first latch control circuit (30) is further adapted to operating the electronic circuit in the normal mode in which the second latch (6) is opened and closed in response to an enable signal (En) from the first latch control circuit (30), and the reduced mode triggered by the random signal generator in which the second latch (6) is held open to reduce a current peak associated with the opening and closing of the second latch (6).

4. An electronic circuit as claimed in claim 2, further comprising a second latch control circuit (30) responsive to further randomly generate signal for operating the electronic circuit in the normal mode in which the second latch (6) is opened and closed in response to an enable signal (En) from the second latch control circuit (6), and the reduced mode triggered by the further randomly generated signal in which the second latch (6) is held open to reduce a current peak associated with the opening and closing of the second latch (6).

5. An electronic circuit as claimed in claim 2, adapted to hold both of the first and second latches (4; 6) open when the electronic circuit is operating in the reduced mode to reduce the current peaks associated with the opening and closing of the latches (4; 6).

6. An electronic circuit as claimed in claim 2, adapted to hold one of the first and second latches (4; 6) open when the electronic circuit is operating in the reduced mode to reduce the current peak associated with the opening and closing of that latch (4, 6).

7. An electronic circuit as claimed in claim 6, adapted to change the latch (4, 6) held open over time.

8. An electronic circuit as claimed in claim 7, adapted to hold the first and second latches (4; 6) open for different lengths of time.

9. An electronic circuit as claimed in any preceding claim, adapted to vary the length of time that the electronic circuit operates in the reduced mode varies.

10. An electronic circuit as claimed in claim 4, wherein the randomly generated signals indicate whether the first latch, second latch or both latches are to be held open when the electronic circuit is operating in the reduced mode.

11. A method of operating an electronic circuit, the electronic circuit comprising first and second pipeline stages and a latch (4) positioned between the stages, the method comprising:
operating the electronic circuit in a normal mode in which the latch (4) is opened and closed in response to an enable signal (En), and a randomly generated reduced mode in which the latch is held open to reduce a current peak associated with the opening and closing of the latch.

12. A method as claimed in claim 11, the electronic circuit further comprising a third pipeline stage and a second latch (6) positioned between the second and third pipeline stages; the method further comprising:
holding the second latch (6) open when the electronic circuit is operating in the reduced mode to reduce a current peak associated with the opening and closing of the second latch (6).

13. A method as claimed in claim 12, wherein the first latch (4) and second latch (6) are held open at different times when the electronic circuit is operating in the reduced mode.

14. A method as claimed in claim 13 wherein the first latch (4) and second latch (6) are held open for different lengths of time.

15. A method as claimed in claim 12, wherein, when the electronic circuit is operating in the reduced mode, both the first latch (4) and second latch (6) are held open.

16. A method as claimed in claim 11, wherein the length of time that the electronic circuit operates in the reduced mode varies.

## Patentansprüche

1. Elektronische Schaltung, umfassend:
erste und zweite Pipeline-Stufen; und
einen ersten Latchspeicher (4), der zwischen den Pipeline-Stufen angeordnet ist;
**gekennzeichnet durch**:
eine erste Latchspeichersteuerschaltung (30), die auf ein zufällig erzeugtes Signal anspricht, um die elektronische Schaltung in einem Normalmodus zu betreiben, in dem der erste Latchspeicher (4) in Reaktion auf ein Freigabesignal (En) von der ersten Latchspeichersteuerschaltung (30) geöffnet und geschlossen wird, und in einem reduzierten Modus zu betreiben, der **durch** das zufällig erzeugte Signal angestoßen wird und in dem der erste Latchspeicher (4) offen gehalten wird, um eine Stromspitze zu reduzieren, die mit dem Öffnen und Schließen des ersten Latchspeichers (4) einhergeht.

2. Elektronische Schaltung nach Anspruch 1, die ferner eine dritte Pipeline-Stufe und einen zweiten Latchspeicher (6) umfasst, der zwischen den zweiten und dritten Pipeline-Stufen angeordnet ist.

3. Elektronische Schaltung nach Anspruch 2, wobei die erste Latchspeichersteuerschaltung (30) ferner so ausgeführt ist, dass sie die elektronische Schaltung im Normalmodus betreibt, in dem der zweite Latchspeicher (6) in Reaktion auf ein Freigabesignal (En) von der ersten Latchspeichersteuerschaltung (30) geöffnet und geschlossen wird, und im reduzierten Modus betreibt, der durch den Zufallssignalgenerator angestoßen wird und in dem der zweite Latchspeicher (6) offen gehalten wird, um eine Stromspitze zu reduzieren, die mit dem Öffnen und Schließen des zweiten Latchspeichers (6) einhergeht.

4. Elektronische Schaltung nach Anspruch 2, die ferner eine zweite Latchspeichersteuerschaltung (30) umfasst, die auf ein weiteres zufällig erzeugtes Signal anspricht, um die elektronische Schaltung im Normalmodus zu betreiben, in dem der zweite Latchspeicher (6) in Reaktion auf ein Freigabesignal (En) von der zweiten Latchspeichersteuerschaltung (6) geöffnet und geschlossen wird, und im reduzierten Modus zu betreiben, der durch das weitere zufällig erzeugte Signal angestoßen wird und in dem der zweite Latchspeicher (6) offen gehalten wird, um eine Stromspitze zu reduzieren, die mit dem Öffnen und Schließen des zweiten Latchspeichers (6) einhergeht.

5. Elektronische Schaltung nach Anspruch 2, die so ausgeführt ist, dass sie sowohl den ersten als auch den zweiten Latchspeicher (4; 6) offen hält, wenn die elektronische Schaltung im reduzierten Modus betrieben wird, um die Stromspitzen zu reduzieren, die mit dem Öffnen und Schließen der Latchspeicher (4; 6) einhergehen.

6. Elektronische Schaltung nach Anspruch 2, die so ausgeführt ist, dass sie einen der ersten und zweiten Latchspeicher (4; 6) offen hält, wenn die elektronische Schaltung im reduzierten Modus betrieben wird, um die Stromspitze zu reduzieren, die mit dem Öffnen und Schließen dieses Latchspeichers (4, 6) einhergeht.

7. Elektronische Schaltung nach Anspruch 6, die so ausgeführt ist, dass sie den Latchspeicher (4, 6), der offen gehalten wird, im Zeitverlauf wechselt.

8. Elektronische Schaltung nach Anspruch 7, die so ausgeführt ist, dass sie die ersten und zweiten Latchspeicher (4; 6) für unterschiedliche Zeitspannen offen hält.

9. Elektronische Schaltung nach irgendeinem der vorangehenden Ansprüche, die so ausgeführt ist, dass sie die Zeitspanne variiert, die die elektronische Schaltung im reduzierten Modus betrieben wird.

10. Elektronische Schaltung nach Anspruch 4, wobei die zufällig erzeugten Signale anzeigen, ob der erste Latchspeicher, der zweite Latchspeicher oder beide Latchspeicher offen zu halten sind, wenn die elektronische Schaltung im reduzierten Modus betrieben wird.

11. Verfahren zum Betreiben einer elektronischen Schaltung, wobei die elektronische Schaltung erste und zweite Pipeline-Stufen und einen Latchspeicher (4), der zwischen den Stufen angeordnet ist, umfasst, wobei das Verfahren umfasst:
Betreiben der elektronischen Schaltung in einem Normalmodus, in dem der Latchspeicher (4) in Reaktion auf ein Freigabesignal (En) geöffnet und geschlossen wird, und in einem zufällig erzeugten reduzierten Modus, in dem der Latchspeicher offen gehalten wird, um eine Stromspitze zu reduzieren, die mit dem Öffnen und Schließen des Latchspeichers einhergeht.

12. Verfahren nach Anspruch 11, wobei die elektronische Schaltung ferner eine dritte Pipeline-Stufe und einen zweiten Latchspeicher (6), der zwischen den zweiten und dritten Pipeline-Stufen angeordnet ist, umfasst; wobei das Verfahren ferner umfasst:
Offenhalten des zweiten Latchspeichers (6), wenn die elektronische Schaltung im reduzierten Modus betrieben wird, um eine Stromspitze zu reduzieren, die mit dem Öffnen und Schließen des zweiten Latchspeichers (6) einhergeht.

13. Verfahren nach Anspruch 12, wobei der erste Latchspeicher (4) und der zweite Latchspeicher (6) zu unterschiedlichen Zeiten offen gehalten werden, wenn die elektronische Schaltung im reduzierten Modus betrieben wird.

14. Verfahren nach Anspruch 13, wobei der erste Latchspeicher (4) und der zweite Latchspeicher (6) für unterschiedliche Zeitspannen offen gehalten werden.

15. Verfahren nach Anspruch 12, wobei dann, wenn die elektronische Schaltung im reduzierten Modus betrieben wird, sowohl der erste Latchspeicher (4) als auch der zweite Latchspeicher (6) offen gehalten werden.

16. Verfahren nach Anspruch 11, wobei die Zeitspanne, die die elektronische Schaltung im reduzierten Modus betrieben wird, variiert.

## Revendications

1. Circuit électronique comprenant :
un premier et un deuxième étage de pipe-line ; et
un premier registre (4) positionné entre les étages de pipe-line ;
**caractérisé par** :
un premier circuit de commande du registre (30) réagissant à un signal généré de manière aléatoire pour faire fonctionner le circuit électronique dans un mode normal dans lequel le premier registre (4) est ouvert et fermé en réponse à un signal d'autorisation (En) provenant du premier circuit de commande du registre (30), et dans un mode réduit déclenché par le signal généré aléatoirement, dans lequel le premier registre (4) est maintenu ouvert pour réduire un courant de crête associé à l'ouverture et à la fermeture du premier registre (4).

2. Circuit électronique selon la revendication 1, comprenant en outre un troisième étage de pipe-line et un deuxième registre (6) positionné entre le deuxième et le troisième étage de pipe-line.

3. Circuit électronique selon la revendication 2, dans lequel le premier circuit de commande du registre (30) est de plus agencé de manière à faire fonctionner le circuit électronique dans le mode normal dans lequel le deuxième registre (6) est ouvert et fermé en réponse à un signal d'autorisation (En) provenant du premier circuit de commande du registre (30), et dans le mode réduit déclenché par le générateur du signal aléatoire dans lequel le deuxième registre (6) est maintenu ouvert pour réduire un courant de crête associé à l'ouverture et à la fermeture du deuxième registre (6).

4. Circuit électronique selon la revendication 2, comprenant en outre un deuxième circuit de commande du registre (30) réagissant à un autre signal généré de manière aléatoire pour faire fonctionner le circuit électronique dans le mode normal dans lequel le deuxième registre (6) est ouvert et fermé en réponse à un signal d'autorisation (En) provenant du deuxième circuit de commande du registre (6), et dans le mode réduit déclenché par l'autre signal généré aléatoirement dans lequel le deuxième registre (6) est maintenu ouvert pour réduire un courant de crête associé à l'ouverture et à la fermeture du deuxième registre (6).

5. Circuit électronique selon la revendication 2, agencé de manière à ce qu'à la fois le premier et le deuxième registre (4 ; 6) sont ouverts lorsque le circuit électronique fonctionne en mode réduit pour réduire le courant de crête associé à l'ouverture et à la fermeture des registres (4 ; 6).

6. Circuit électronique selon la revendication 2, agencé de manière à ce que le premier et le deuxième registre (4 ; 6) sont ouverts lorsque le circuit électronique fonctionne en mode réduit pour réduire le courant de crête associé à l'ouverture et à la fermeture de ce registre (4 ; 6).

7. Circuit électronique selon la revendication 6, agencé de manière à changer au fil du temps le registre (4 ; 6) maintenu ouvert.

8. Circuit électronique selon la revendication 7, agencé de manière à maintenir ouverts le premier registre et le deuxième registre (4 ; 6) pendant des laps de temps différents.

9. Circuit électronique selon l'une quelconque des revendications précédentes, agencé de manière à faire varier le laps de temps pendant lequel le circuit électronique fonctionne en mode réduit.

10. Circuit électronique selon la revendication 4, dans lequel les signaux générés aléatoirement indiquent si le premier registre, le deuxième registre ou les deux registres doivent être maintenus ouverts lorsque le circuit électronique fonctionne en mode réduit.

11. Procédé de fonctionnement d'un circuit électronique, le circuit électronique comprenant un premier et un deuxième étage de pipe-line et un registre (4) positionné entre les étages de pipe-line, le procédé comprenant :
le fonctionnement du circuit électronique dans un mode normal dans lequel le registre (4) est ouvert et fermé en réponse à un signal d'autorisation (En), et dans un mode réduit généré aléatoirement dans lequel le registre est maintenu ouvert pour réduire un courant de crête associé à l'ouverture et à la fermeture du registre.

12. Procédé selon la revendication 11, le circuit électronique comprenant en outre un troisième étage de pipe-line et un deuxième registre (6) positionné entre le deuxième et le troisième étage de pipe-line ; le procédé comprenant en outre :
le maintien à l'état ouvert du deuxième registre (6) lorsque le circuit électronique fonctionne dans le mode réduit pour réduire un courant de crête associé à l'ouverture et à la fermeture du deuxième registre (6).

13. Procédé selon la revendication 12, dans lequel le premier registre (4) et le deuxième registre (6) sont maintenus ouverts à différents moments lorsque le circuit électronique fonctionne en mode réduit.

14. Procédé selon la revendication 13, dans lequel le premier registre (4) et le deuxième registre (6) sont maintenus ouverts pendant des laps de temps différents.

15. Procédé selon la revendication 12, dans lequel lorsque le circuit électronique fonctionne en mode réduit, à la fois le premier registre (4) et le deuxième registre (6) sont maintenus ouverts.

16. Procédé selon la revendication 11, dans lequel la durée pendant laquelle le circuit électronique fonctionne en mode réduit varie.
